# EUROPEAN PATENT APPLICATION

(11) **EP 4 144 554 A1**
(43) Date of publication of application: **08.03.2023**
(21) Application number: 22193192.6
(22) Date of filing: 31.08.2022
(51) Int. Cl.: B60K 6/20, B60K 6/36, B60K 6/387, B60K 6/405, B60K 6/48, B60K 6/52

(54) **TRACTION ASSEMBLY FOR A VEHICLE**

(30) Priority: 06.09.2021 IT 202100023018
(71) Applicant: IVECO S.P.A., 10156 Torino (IT)
(72) Inventor: PEREIRA DE LEMOS, José Francivaldo, SETE LAGOAS MG (BR); BERNARDINI, Alessandro, 16126 Genova (IT)
(74) Representative: Studio Torta S.p.A.

(57) **Abstract**

A traction assembly (1) for a vehicle, comprising a first and a second coupling (2, 3) configured to be connected respectively to a front axle and a rear axle, an input clutch (4) configured to be connected to an output shaft of an internal combustion engine and at least one electric machine (5), the traction assembly (1) comprising a casing (7) defining a housing (8) and a transmission (6) in the housing (8) and configured to allow torque transmission between the input clutch (4), the at least one electric machine (5) and the couplings (2, 3), the transmission (6) being controlled so as to allow torque transmission according to multiple operational modes.

## Description

### CROSS-REFERENCE TO RELATED APPLICATIONS

This Patent Application claims priority from Italian Patent Application No. 102021000023018 filed on September 6, 2021.

### TECHNICAL FIELD

This invention relates to a vehicular traction assembly, more specifically to a hybrid traction assembly for a heavy vehicle.

### STATE OF THE PRIOR ART

The ecological transition increasingly requires the use of electric motors to assist or replace internal combustion engines for the purposes of vehicular transport.

To this end, it is known to provide traction assemblies configured to provide torque to the wheels of a vehicle comprising, at the same time, a power take-off configured to connect to an output shaft of an internal combustion engine and one or more electric motors configured to cooperate with or replace this internal combustion engine.

It is required that these traction assemblies are compact and versatile, i.e., that they do not excessively increase the dimensions and weight of the vehicle but that they manage to provide various operating configurations. This requirement is felt more urgently in heavy vehicles, where it is necessary to provide torque to the wheels depending on the different vehicle operating needs.

Thus, the need is felt to provide traction assemblies that manage to be versatile and compact.

The object of this invention is to meet the above requirements in a cost-effective and optimised manner.

### SUMMARY OF THE INVENTION

The above-mentioned purpose is achieved with a vehicle traction assembly as claimed in the attached claims.

### BRIEF DESCRIPTION OF THE DRAWINGS

For a better understanding of this invention, a preferred embodiment is described below by way of non-limiting example and with reference to the accompanying drawings, wherein:
- Figure 1 illustrates a schematic, side view of a traction assembly according to the invention;
- Figure 2 illustrates a front cross-section view along the line II-II of the assembly in Figure 1;
- Figures 3A-3C illustrate different operating conditions of a portion of the assembly illustrated in Figure 2;
- Figures 4A-4B illustrate different operating conditions of a portion of the assembly illustrated in Figure 2;
- Figures 5A-5B illustrate different operating conditions of a portion of the assembly illustrated in Figure 2; and
- Figures 6A-6C illustrate different operating conditions of a portion of the assembly illustrated in Figure 2.

### DETAILED DESCRIPTION OF THE INVENTION

The reference number 1 indicates, in the attached figures, a traction assembly according to the invention configured to transmit torque to corresponding couplings 2, 3 configured to be connected to a front axle (not illustrated) and a rear axle (not illustrated) of a vehicle, not illustrated, to transmit the torque received to the latter.

In particular, the traction assembly 1 is configured to provide torque to the couplings 2, 3 starting from at least one of either: an input clutch 4 configured to be connected to a combustion engine (not illustrated) of the vehicle and at least one electric machine 5, described, below, for brevity, as an electric motor, configured to provide torque using electricity, for example provided by a vehicle battery set (not illustrated) or to absorb torque to generate electricity to provide to this battery set.

The traction assembly 1 comprises a transmission 6 operationally placed between the couplings 2, 3, the input clutch 4 and the at least one electric motor 5 configured to enable the transmission of torque according to at least one speed ratio.

Advantageously, the traction assembly 1 comprises a casing 7 configured to delimit a space 8 that is isolated from the outside; the space 8 is configured to house the transmission 6 as described below. Preferably, the casing 7 comprises a central portion 7a and a pair of side portions 7b placed near the couplings 2, 3.

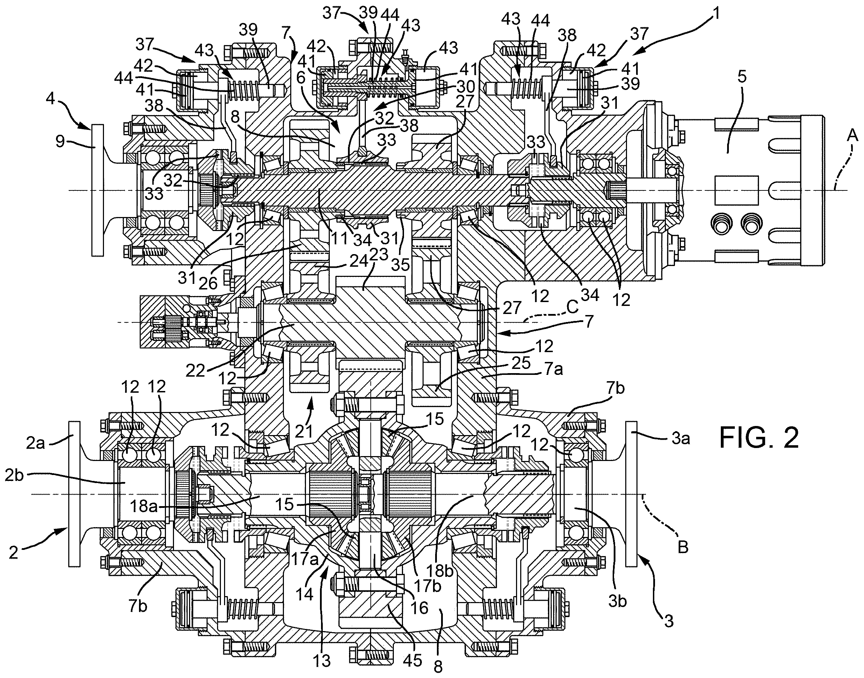

As illustrated in Figure 2, the transmission 6 comprises an input shaft 11 rotationally supported by the central portion 7a of the casing 7 via a pair of rolling supports 12 around an axis A and extending partially outside the casing 7. The input clutch 4 basically comprises a connection plate 9 that can be connected to the internal combustion engine and to the shaft 11 as described below.

The transmission 6 comprises a differential assembly 13 that is operationally placed between the couplings 2, 3 and the shaft 11.

More precisely, the couplings 2, 3 each comprise a plate 2a, 3a connecting with the respective axles and placed outside the casing 7, in particular by the side portions 7b of the latter, and a hub 2b, 3b extending inside the casing 7 and rotationally supported on the side portion 7b of the latter via the rolling supports 12.

In particular, the hubs 2b, 3b are coaxial between them around a rotation axis B that, preferably, is parallel to the rotation axis A of the shaft 11.

The hubs 2b, 3b are configured to cooperate with the differential assembly 13 as described, in detail, below.

The differential assembly 13 may be, as illustrated, of a known type, i.e., comprising a chain carrier 14 carrying multiple planet gears 15, for example four planet gears equally angularly spaced apart by 90° and supported by a cross-shaped support 16 that is rigidly carried by the chain carrier 14 and around which arms can rotate the planet gears 15. In particular, the planet gears rotate on the support 14 around axes contained on a plane perpendicular to the axis B.

The planet gears 15 cooperate with a corresponding crown wheel comprising, respectively, a conic, left toothed wheel 17a and a right toothed wheel 17b rigidly carried by corresponding support shafts 18a, 18b carried rotationally by the casing 7, around the axis B and, thus, coaxially between them; advantageously, these support shafts 18a, 18b are supported rotationally freely by the central portion 7a using rolling supports 12.

In particular, the differential assembly 13 is operationally connected to the shaft 11 via a reducer assembly 21 comprising a support shaft 22 carried rotationally freely by the casing 7 around an axis C using rolling supports 12, in particular by the central portion 7a in a vertical position between the shaft 11 and the differential assembly 13.

Specifically, the support shaft 22 defines a toothing 23 rigidly carried by the support shaft 22 and, preferably, advantageously made of a single piece with the same and supports a pair of toothed wheels 24, 25, in the example described placed to the side of the toothing 23. The toothed wheels 24, 25 are preferably carried, integral with the rotation, by the support shaft 22.

The shaft 11 carries a pair of toothed wheels 26, 27 configured to mesh with the toothed wheels 24, 25 and, as a result of the above, carried rotationally freely around the axis A by the shaft 11.

The transmission 6 comprises selector means 30 that are configured to make one of the toothed wheels 26, 27 selectively integral with the shaft 11 and additional selector means 30 configured to selectively connect the output shaft of the electric motor 5 to the shaft 11 and additional selector means 30 to selectively connect the input clutch 4 to the shaft 11.

Preferably, these selector means 30 comprise a sleeve 31 carried integral to the rotation but free in its translation on the axis A by the shaft 11. In particular, the sleeve 31 defines a toothing 32 configured to cooperate with a toothing 33 made on the shaft 11.

The toothed wheels 26, 27 are each provided with a hub that defines respective portions equipped with toothings 34, 35. Similarly, the output shaft of the electric motor 5 and the input clutch 4 carry corresponding toothings 36. The sleeve 31 is sized so that, running along the axis A, it can mesh its toothing 32 with the toothing 33 of the shaft 11 and one of the toothings 34, 35 of the toothed wheels 26, 27 or with the toothing 36 of the input clutch 4 and/or of the electric motor 5.

In particular, the selector means 30 comprise actuator means 37 configured to move the sleeve 31 along the shaft 11. Advantageously, these actuator means 37 are pneumatic actuator means.

Preferably, according to the embodiment described, these actuator means 37 comprise a rod 38 carried rigidly by a shaft 39 equipped, at its respective ends, with at least one free piston 41 to move in a respective chamber 42 configured to selectively house a fluid under pressure, for example compressed air.

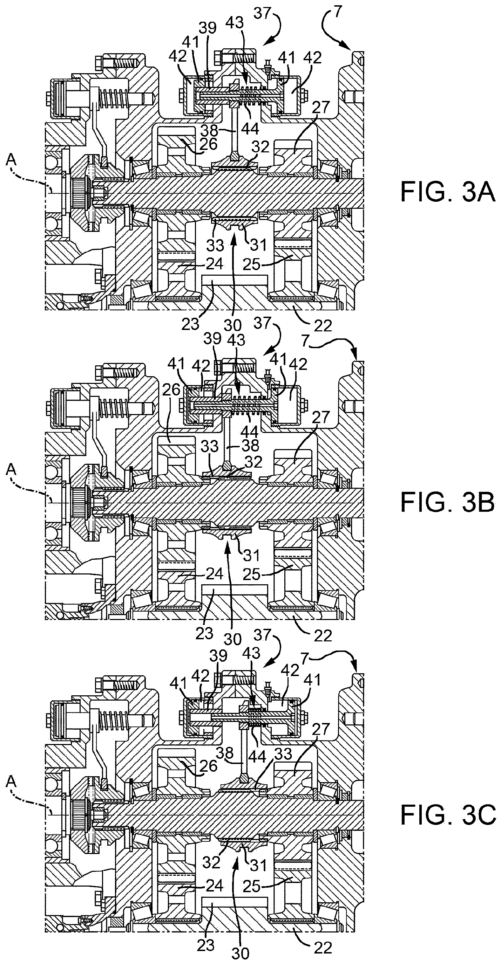

As best illustrated in Figures 3A-3C, 4A-4B, and 5A-5B, the actuator means 37 between the toothed wheels 26, 27 comprise two pistons 41 and two chambers 42 while the actuator means 37 respectively placed between the input clutch 4, electric motor 5, and shaft 11 comprise just one piston 41 and just one chamber 42.

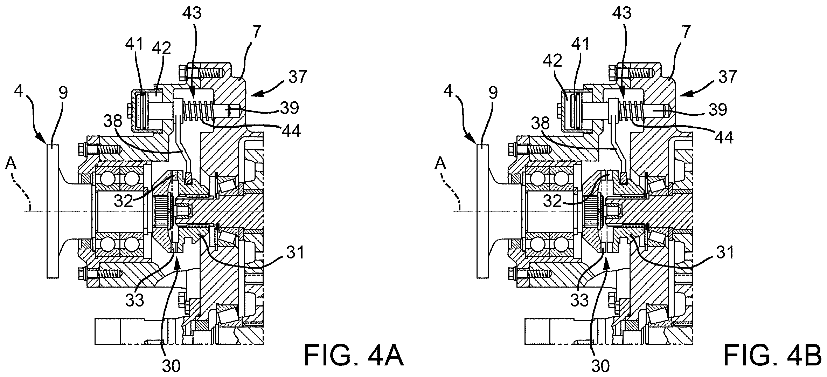

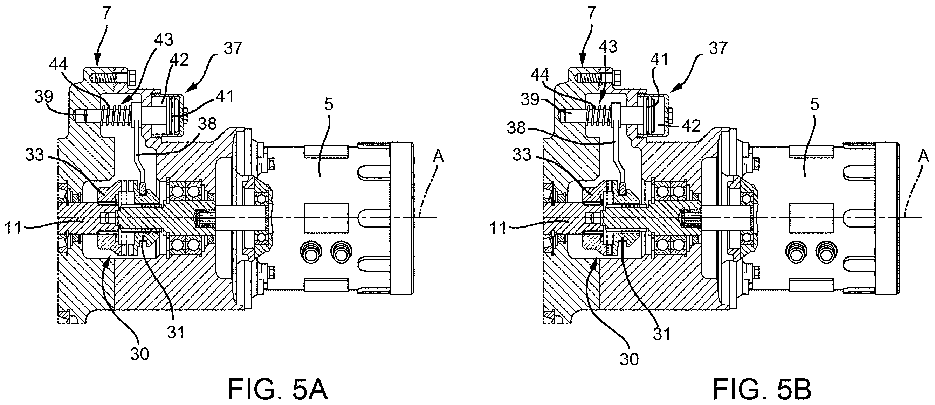

Advantageously, the actuator means 37 also comprise elastic means 43 such as a helical spring 44, operationally placed between the shaft 39 and the casing 7. In particular:
- the sleeve 31 placed between the toothed wheels 26 and 27 is pushed by the elastic means 43 so as to keep the sleeve 31 meshed with the toothed wheel 26 when there is no compressed fluid in one of the chambers 42 (as illustrated in Figures 4A-4C);
- the sleeve 31 placed between the input clutch 4 and the shaft 11 is pushed by the elastic means 43 so as to keep the sleeve 31 meshed with the input clutch 4 when there is no compressed fluid in one of the chambers 42 (as illustrated in Figures 4A-4B); and
- the sleeve 31 placed between the electric motor 5 and the shaft 11 is pushed by the elastic means 43 so as to keep the sleeve 31 idle on the output shaft of the electric motor 5 when there is no compressed fluid in one of the chambers 42 (as illustrated in Figures 5A-5B).

The toothing 23 of the support shaft 22 meshes with a toothing 45 carried integrally by the chain carrier 14 of the differential assembly 13. In the embodiment described, the chain carrier 14 is divided into two axial portions, symmetrical with each other, and the toothing 45 is made on a circular crown fixed between the two axial portions of the chain carrier 14 via threaded connection means.

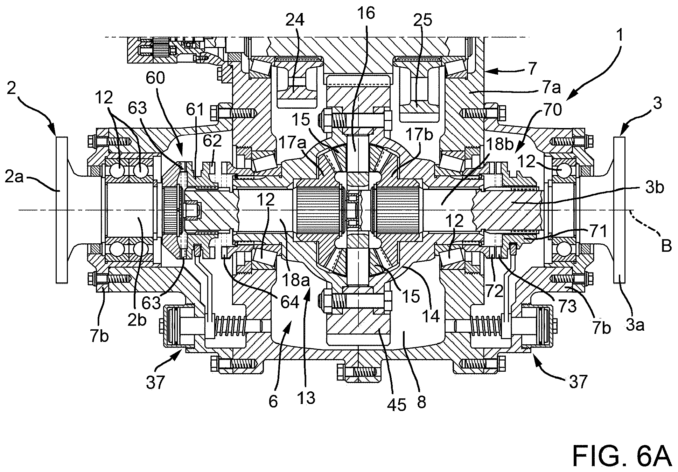

With reference, now, to Figures 6A-6C, it should be noted how, preferably, the hub 2b of the coupling 2 is separated from the support shaft 18a while it should be noted how the hub 3b of the coupling 3 consists of a single piece with the support shaft 18b.

The transmission 6 comprises selector means 60 to select an integral traction of the vehicle, i.e., to enable the provision of output torque from the differential to both the couplings 2, 3.

According to the above, the selector means 60 are configured to connect the hub 2b of the coupling 2 to the support shaft 18a. In particular, the selector means 60 comprise a sleeve 61 equipped with corresponding toothings 62, 63 made on axially opposite sides to each other along the axis B.

The sleeve 61 is supported, integral in rotation but free to run along the axis B, for example via a grooved coupling, on the support shaft 18a and is configured to assume a first position in which the toothing 62 cooperates with another toothing 64 carried rigidly by the hub 2b and a second position in which the toothing 63 cooperates with a toothing 65 that is rigidly carried by the support shaft 18a.

The sleeve 61 is controlled via actuator means 37 controlling the selection of the sleeve 61 similarly to the selection of the toothed wheels 26, 27 and, thus, not further described for brevity's sake. In particular, the elastic means 43 keep the sleeve in a rest condition so that the toothings 62 and 64 are meshed between them.

The transmission 6 comprises locking means 70 of the differential assembly 13 to inhibit operation thereof.

According to the above, the locking means 70 are configured to connect the chain carrier 14 to the casing 7.

In particular, the locking means 70 comprise a sleeve 71 supported, integral in rotation but free to run along the axis B, for example using a grooved coupling, on the support shaft 18b. The sleeve 71 is equipped with a toothing 72 that is axial and is configured to assume a first position in which the toothing 72 cooperates with another toothing 73 carried rigidly by the casing 7 and a second position in integral rotation with the support shaft 18b, in neutral.

The sleeve 71 is controlled using actuator means 37 controlling the selection of the sleeve 61 similarly to the selection of the toothed wheels 26, 27 and, thus, not further described for brevity's sake. In particular, the elastic means 43 keep the sleeve in a rest condition so that the sleeve 71 rotates idly with the support shaft 18b.

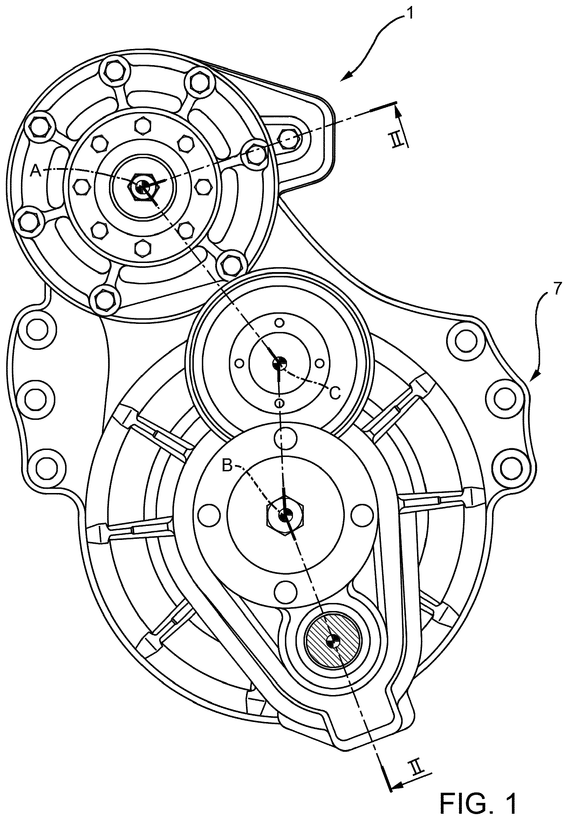

Referring to Figure 1, the relative arrangement between the couplings 2, 3, the input clutch 4, the electric motor 5, and the support shaft 22 is clear, where it should be noted that the electric motor 5 and the input clutch 4 are carried on opposite sides to the casing 7 but colinear between them along the axis A. In particular, the electric motor 5 is connected to the outside of the casing 7 so that its output shaft passes through it in the space 8.

In particular, the axis B is placed vertically below the axis A of the input clutch 4 of the electric motor 5. In particular, the axis C of the support shaft 22 coincides with a vertical axis passing through the axis B and is vertically placed between the axes A and D.

Clearly, additional mechanical elements such as additional, sliding, rolling supports, gaskets, and fasteners although illustrated are not described for brevity's sake and since they relate to particular constructions that may vary depending on different assembly and manufacturing settings.

The operation of the traction assembly 1 according to the invention as described above is as follows.

In a first, purely thermal, operating condition, the torque released to the couplings 2, 3 is exclusively provided by the input clutch 2. In this configuration, represented by the combination of the states in Figure 4A, Figure 5A, and Figures 3B, 3C, the actuator means 30 select one of the toothed wheels 26, 27 so that it is integral with the shaft 11 while the output shaft of the electric motor is disconnected from the shaft 11 and the input clutch 4 is connected to it. The torque provided thus to the shaft 11 flows via the coupling with the corresponding toothed wheel 24, 25 to the support shaft 22 and, via the gear between the toothings 23 and 45, to the differential 13. Here, as is known in itself, it is distributed to the toothed wheels 17a, 17b and, thus, to the hubs 18a, 18b.

In a second operating condition, purely electrical, the torque released to the couplings 2, 3 is provided exclusively by the electric motor 5. In this configuration, represented by the combination of the states in Figure 4B, Figure 5B, and Figures 3B, 3C, the actuator means 30 select one of the toothed wheels 26, 27 so that it is integral with the shaft 11, while the input clutch 4 is disconnected from the shaft 11 and the electric motor 5 is connected to it. The torque provided thus to the shaft 11 flows via the coupling with the corresponding toothed wheel 26, 27 to the support shaft 22 and, via the gear between the toothings 23 and 45, to the differential 13. Here, as is known in itself, it is distributed to the toothed wheels 17a, 17b and, thus, to the hubs 18a, 18b.

In a third, hybrid, operating condition, the torque released to the couplings 2, 3 is provided both by the electric motor 5 and the input clutch 4 or only by the latter and part is used by the electric motor 5 as generator or all the drive torque from the input clutch is absorbed by the electric motor 5. In this configuration, represented by the combination of the states in Figure 4A, 5B and Figure 3A/3B/3C, the actuator means 30 select one of the toothed wheels 26, 27 so that it is integral with the shaft 11, or none of these, and connect both the electric motor 5 and the input clutch 2 to the shaft 11. The torque provided thus to the shaft 11 flows via the corresponding toothed couplings to the support shaft 22, and via the gear between the toothings 23 and 45, to the differential 13. Here, as is known in itself, it is distributed to the toothed wheels 17a, 17b and, thus, to the hubs 18a, 18b. If no toothed wheel 26, 27 is meshed, all the torque flows from the input clutch to the electric motor 5.

In each of the three operating conditions described above, each equipped with two speeds, three operating variants as described below can also be selected.

In a first operating variant (Figure 6A), the selector means 30 keep the hub 2b of the front coupling 2 separated from the hub 18a of the toothed wheel 17a. In this way, the vehicle operates according to a rear traction configuration and all the traction torque flows towards the rear coupling 3.

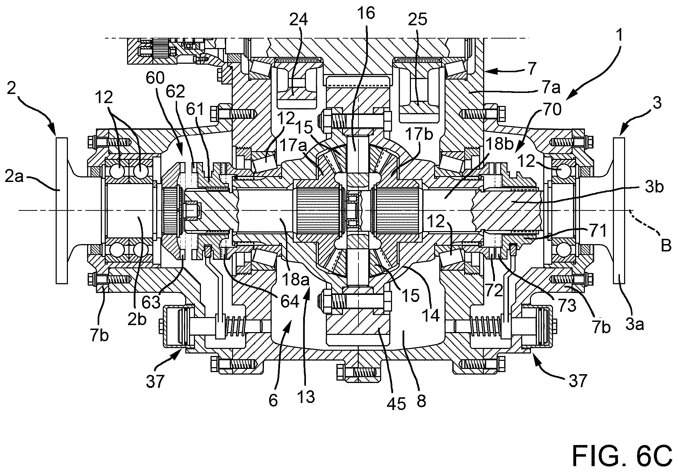

In a second operating variant (Figure 6C), the selector means 30 make the hub 2b integral with the front coupling 2 separated from the hub 18a of the toothed wheel 17a. In this way, the vehicle operates according to an integral traction configuration and the differential 13 distributes the traction torque among the couplings 2 and 3.

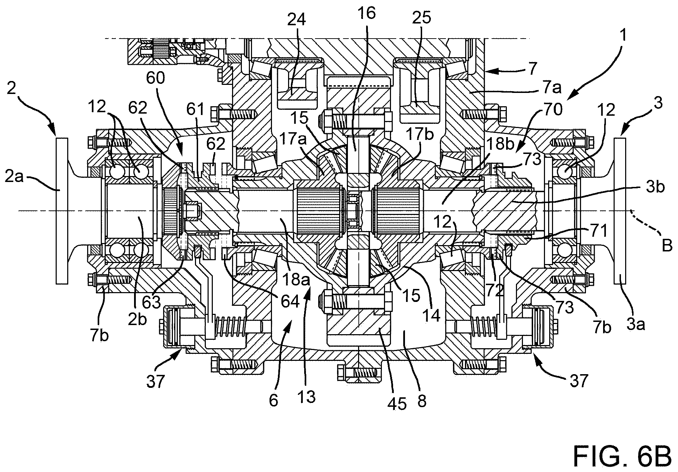

In a third operating variant (Figure 6B), potentially combined with the two preceding ones, the selector means 30 make the chain carrier 14 integral with the casing 7, locking the differential and making the rear coupling rotate (as illustrated or both combining with the operation in Figure 6C) at the same speed as the chain carrier 14.

In view of the operations included above in Figure 6A and 6C, the vehicle comprises, advantageously, a front axle equipped with free-wheeling devices, advantageously integrated in wheels, configured to enable the operation in neutral of the hub since the front coupling 2 is not integral with the hub 18a.

The advantages of a traction assembly according to the invention are clear from the foregoing.

The traction system makes it possible, as shown by the high number of operating combinations illustrated, to provide a great variety of traction transmission ratios that are completely thermal, completely electric, hybrid, those with integral or rear traction, or with locked differential.

The traction system is also particularly compact and uses few mechanical elements; thus, the manufacturing costs are reduced.

Again, although all the rotating mechanical elements are inside the casing of the transmission, which is lubricated, the service life of the traction system is increased and the maintenance costs decrease.

Lastly, it is clear that modifications and variations may be made to the traction assembly and vehicle manufactured according to the present invention, without however departing from the scope of protection defined by the claims.

For example, it is clear that the toothed wheels described, the differential, and other types of mechanical connection may be replaced by equivalent devices.

Similarly, the number of electric motors or the shape of the casing may vary or, again, the reduction stage may involve more speed shifts.

Again, although as described just one front coupling can disconnect from the differential 13, it is possible to provide for the similar disconnection to the rear coupling providing a purely frontal traction system.

## Claims

1. - A traction assembly (1) for a vehicle, said traction assembly (1) comprising a first and a second coupling (2, 3) configured to be connected respectively to a front axle and a rear axle of said vehicle, an input clutch (4) configured to be connected to an output shaft of an internal combustion engine of said vehicle and at least one electric machine (5), said traction assembly (1) comprising a casing (7) defining a housing (8) and a transmission (6) housed in said housing (8) and configured to allow torque transmission between said input clutch (4), the at least one electric machine (5) and the couplings (2, 3), said transmission (6) being controlled so as to allow torque transmission according to one of:
- a mode where only said input coupling (4) provides torque to said couplings (2, 3);
- a mode where only said at least one electric machine (5) supplies torque to said couplings (2, 3); and
- a mode where both between said inlet (4) and said at least one electric machine (5) supplies torque to said couplings (2,3),
wherein said transmission (6) comprises a differential (13) comprising a first output hub (18a) connectable to said first coupling (2) and a second output hub (18b) connectable to said second coupling (3), said hubs (18a, 18b) and said couplings (2, 3) being coaxial to each other along an axis (B),
said transmission (6) comprising a shaft (11) supported in a rotationally free way around an axis (A) on said casing (7), said input clutch (4) and said at least one electric machine (5) being connectable to called tree (11),
said shaft (11) being operatively connected to said differential (13) through at least one torque transmission ratio.

2. - The assembly according to Claim 1, wherein said shaft (11) carries toothed wheels (26, 27), said assembly comprising selector means (30) configured to operatively connect one of said toothed wheels (26, 27) to said differential (13).

3. - The assembly according to claim 1 or 2, in which said input coupling (4) and said at least one electric machine (5) can be selectively connected to the shaft (11) through selector means (30).

4. - The assembly according to one of claims 1 to 3, wherein said transmission (6) comprises a reduction stage (21) operatively interposed between the shaft (11) and said differential (13).

5. - The assembly according to claim 4, where said reduction stage (21) comprises a support shaft (22) carried in a rotationally free manner by said casing (7) around an axis (C), said support shaft comprising a pair of toothed wheels (24, 25) configured to cooperate with said toothed wheels (26, 27) of said shaft (11), said support shaft (22) defining a toothing (23) configured to cooperate with said differential (13).

6. The assembly according to Claim 5, wherein said differential (13) is connected to said toothing (23) by means of a toothing (45) carried rigidly by the chain carrier (14) of said differential (13).

7. - The assembly according to one of claims 2 to 6, in which said selector means (30) comprise a sleeve (31) movable under the action of said actuator means (37) along the shaft (11) in a rotationally coupled manner , said sleeve (31) defining a toothing (32) configured to cooperate with a toothing (33) made on said shaft (11) and with a further toothing (34, 35, 36) made on the element to be connected to said shaft ( 11), said sleeve (31) being sized and controlled by said actuator means (37) so as to assume a position in which it does not mesh with any of said further toothings (34, 35, 36) and a position in which it meshes with a of them.

8. - The assembly according to one of the previous claims, wherein said transmission (6) comprises selector means (60) configured to make one of said first and second hubs (18a, 18b) integral with the respective first and second coupling (2, 3).

9. The assembly according to claim 8, wherein said selector means (60) comprise a sleeve (61) movable under the action of said actuator means (37) along the respective hub (18a, 18b) in a rotationally coupled manner thereto, said sleeve (61) defining a first and a second toothing (62, 63) configured to selectively cooperate with a toothing (64) made on said coupling (2, 3) and a second toothing (65) made on said hub (18a, 18b).

10. The assembly according to one of the previous claims, wherein said transmission (6) comprises locking means (70) of said differential (13) configured to lock the operation of said differential (13).

11. The assembly according to claim 10, wherein said locking means (70) comprise a sleeve (71) movable under the action of said actuator means (37) along one of said hubs (18a, 18b) in a rotationally coupled manner thereto, said sleeve (71) defining a toothing (72) configured to selectively cooperate with a toothing (73) made on said casing (7).

12. The assembly according to one of claims 2 to 11, wherein said actuator means (37) comprise at least one of a pneumatic, hydraulic, mechanical actuator.

13. - The assembly according to one of the preceding claims, in which said at least one electric machine (5) is carried on the opposite side of said casing (7) with respect to said input coupling (4).

14. - A vehicle comprising an internal combustion engine, a front axle and a rear axle and a traction assembly (1) according to one of the preceding claims.

15. The vehicle according to claim 14, wherein at least one of said front and rear axle comprises freewheel means, said freewheel means being configured to allow the transmission of torque to the wheel hubs of said axle or to allow them to be supported in a neutral manner.
